# EUROPÄISCHE PATENTANMELDUNG

(11) **EP 2 848 797 A2**
(43) Veröffentlichungstag der Anmeldung: **18.03.2015**
(21) Anmeldenummer: 14181107.5
(22) Anmeldetag: 15.08.2014
(51) Int. Cl.: F02M 31/125

(54) **Baukastensystem für einen Kraftstoffheizer**

(30) Priorität: 12.09.2013 DE 102013218324
(71) Anmelder: Mahle International GmbH, 70376 Stuttgart (DE)
(72) Erfinder: DOBERNIG, Daniel, 9131 Grafenstein (AT); PFEIFFER, Gert, 9020 Klagenfurt (AT); PRAPROTNIG, Heinz, 9125 Kühnsdorf (AT); SCHADLER, Werner, 8430 Seggauberg (AT)
(74) Vertreter: BRP Renaud & Partner mbB Rechtsanwälte Patentanwälte Steuerberater

(57) **Zusammenfassung**

Die Erfindung betrifft ein Baukastensystem (1) für einen Kraftstoffheizer (2) zum Beheizen von Kraftstoff, umfassend zumindest
- ein Gehäuse (3),
- zwei Heizelemente (4), die an dafür vorgesehenen Plätzen im Gehäuse (3) einbaubar sind,
- eine Steuerungs-/Regelungseinrichtung (5) zum individuellen Ansteuern der zumindest zwei Heizelemente (4).

Hierdurch ist eine flexible Herstellung von Kraftstoffheizern (2) möglich.

## Beschreibung

Die vorliegende Erfindung betrifft ein Baukastensystem für einen Kraftstoffheizer. Die Erfindung betrifft außerdem einen aus einem derartigen Baukastensystem zusammengebauten Kraftstoffheizer sowie ein Kraftstofffilter mit einem solchen Kraftstoffheizer.

In modernen Kraftfahrzeugen werden oftmals Kraftstoffheizer zum Beheizen des Kraftstoffs eingesetzt, um insbesondere bei der Verwendung von Dieselkraftstoffen ein Versulzen derselben bei geringen Außentemperaturen, was unter Umständen zu einem Verstopfen eines Kraftstofffilters führen könnte, zuverlässig verhindern zu können. Je nach Leistung des Kraftfahrzeugs muss dabei unterschiedlich viel Kraftstoff während einer vorgegebenen Zeit erwärmt werden, weshalb derzeit eine ganze Palette unterschiedlichster Kraftstoffheizer mit unterschiedlichen Leistungen und beispielsweise geometrischen Abmessungen, vorgehalten werden müssen. Dies führt zwangsläufig zu einer großen Teilevielfalt und damit verbunden zu hohen Lager- und Logistikkosten.

Die vorliegende Erfindung beschäftigt sich daher mit dem Problem, Kraftstoffheizer flexibler und damit auch kostengünstiger herstellen zu können.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, erstmals einen Kraftstoffheizer modular aufzubauen und die einzelnen Module bzw. Komponenten des Kraftstoffheizers in einem Baukastensystem zusammenzufassen bzw. vorzuhalten. Das erfindungsgemäße Baukastensystem umfasst dabei zumindest ein Gehäuse für den Kraftstoffheizer, zwei Heizelemente, die an vorgesehenen Plätzen im Gehäuse einbaubar sind, sowie eine Steuerungs-/Regelungseinrichtung zum individuellen Ansteuern der zumindest zwei Heizelemente. Mittels eines derartigen Baukastensystems ist es erstmals möglich, die Teilevielfalt für unterschiedliche Kraftstoffheizer und damit verbunden auch die Lager- und Logistikkosten deutlich zu reduzieren, da beispielsweise je nach gewünschter Leistung unterschiedlich viele Heizelemente im Gehäuse des Kraftstoffheizers angeordnet werden können. Durch die erfindungsgemäß vorgesehene Steuerungs-/Regelungseinrichtung ist zudem ein äußerst flexibles Beheizen des Kraftstoffes möglich, da beispielsweise bei einer schwächeren erforderlichen Heizleistung lediglich ein Heizelement oder lediglich eine bestimmte Anzahl an Heizelementen aktiviert wird. Hierbei ist insbesondere auch eine stufenweise bzw. gestaffelte Ansteuerung der einzelnen Heizelemente denkbar, um beispielsweise Spannungsspitzen beim Einschalten zu minimieren (Verschleppung des Einschaltstroms).

Zweckmäßig sind die Heizelemente als sogenannte PTC-Heizelemente ausgebildet. Derartige Kaltleiter sind üblicherweise stromleitende Materialien, die bei tieferen Temperaturen den Strom besser leiten können als bei hohen. Ihr elektrischer Widerstand vergrößert sich somit bei steigender Temperatur. Der Einsatz derartiger PTC-Heizelemente ermöglicht so ein temperaturabhängiges selbstregulierendes Beheizen des Kraftstoffs.

Bei einer weiteren vorteilhaften Ausführungsform der erfindungsgemäßen Lösung weisen zumindest zwei Heizelemente eine unterschiedliche Heizleistung auf. Denkbar ist somit, dass beispielsweise Heizelemente mit 200 Watt und mit 400 Watt Heizleistung eingesetzt werden können. Rein theoretisch ist selbstverständlich auch denkbar, dass sämtliche bzw. zumindest eine überwiegende Anzahl der Heizelemente als Gleichteile ausgebildet sind und somit identische Heizleistungen aufweisen. In diesem Fall könnte die Heizleistung durch Zu- oder Abschalten einzelner Heizelemente variiert werden.

Zweckmäßig besitzt zumindest ein Heizelement ein eigenes Relais. Ein derartiges Relais stellt einen Schalter dar, der mittels eines Steuerstroms von der Steuerungs-/Regelungseinrichtung ein- bzw. ausgeschaltet werden kann. Derartige Relais sind vergleichsweise kostengünstig herstellbar und können in das jeweilige Heizelement integriert werden. Hierdurch können diese beispielsweise in geeignete Steckplätze des Gehäuses eingesteckt und durch den Einsteckvorgang elektrisch leitend mit der Steuerungs-/Regelungseinrichtung verbunden werden. Hierfür können entsprechende Verbindungen im Gehäuse zur Steuerungs-/Regelungseinrichtung vorgesehen sein. Selbstverständlich ist auch denkbar, dass die Heizelemente kein eigenes Relais aufweisen, sondern ein derartiges Relais für jedes anzusteuernde Heizelement an der Steuerungs-/Regelungseinrichtung angeordnet ist.

Zweckmäßig ist der Kraftstoffheizer als Stabheizer, als Aufsteckheizer oder als Deckelheizer ausgebildet. Bereits diese nicht abschließende Aufzählung lässt erahnen, dass durch unterschiedliche Gehäuse beispielsweise der Kraftstoffheizer als Stabheizer, als Aufsteckheizer oder als Deckelheizer ausgebildet werden kann. Durch eine unterschiedliche Anzahl an Heizelementen kann darüber hinaus jeder Kraftstoffheizer mit individueller Heizleistung konfiguriert werden.

Die Erfindung beruht weiter auf dem allgemeinen Gedanken, einen Kraftstoffheizer modular auszubilden und aus dem in den vorherigen Absätzen beschriebenen Baukastensystem individuell zusammenzubauen. Je nach gewünschter Heizleistung bzw. je nach gewünschtem Einsatzbereich besitzt dabei der erfindungsgemäße Kraftstoffheizer ein Gehäuse sowie zumindest zwei Heizelemente, die an dafür vorgesehenen Plätzen im Gehäuse eingebaut sind. Ebenfalls weist der erfindungsgemäße Kraftstoffheizer eine Steuerungs-/Regelungseinrichtung zum individuellen Ansteuern der zumindest zwei Heizelemente auf. Ein derartiger Kraftstoffheizer kann beispielsweise als Deckelheizer bzw. als Stabheizer ausgebildet sein und im Bereich eines Kraftstofffilters eingesetzt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: ein erfindungsgemäßes Baukastensystem für einen Kraftstoffheizer,
- Fig. 2: eine mögliche Ausführungsform eines erfindungsgemäßen Kraftstoffheizers im geöffneten Zustand,
- Fig. 3a-c: unterschiedliche Bauarten von erfindungsgemäßen Kraftstoffheizern,
- Fig. 4: eine Schnittdarstellung durch den Kraftstoffheizer im Bereich der Heizelemente.

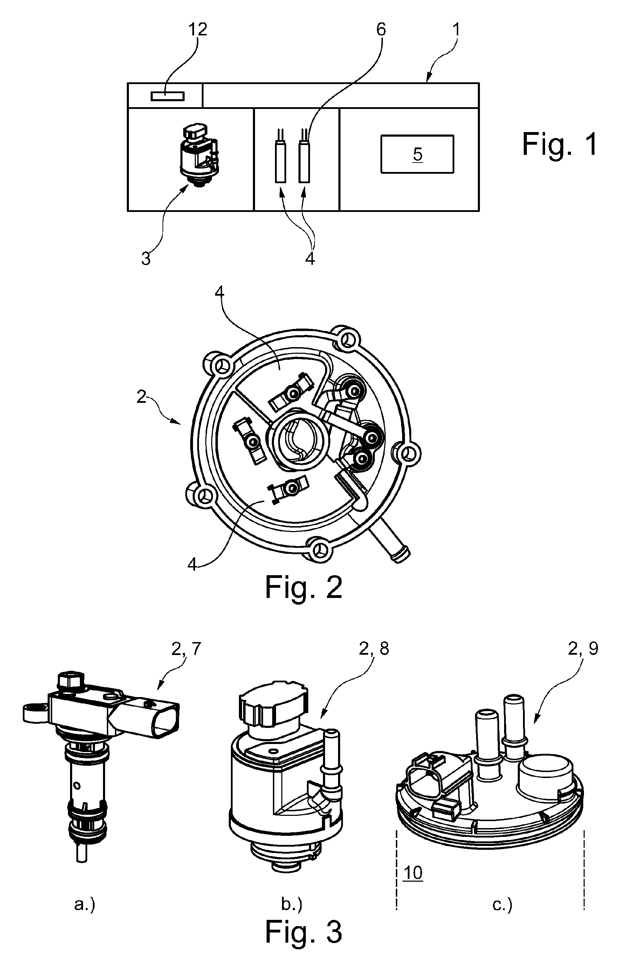

Entsprechend der Fig. 1 weist ein erfindungsgemäßes Baukastensystem 1 für einen Kraftstoffheizer 2 (vergleiche die Figuren 2 und 3) zumindest ein Gehäuse 3, wenigstens zwei Heizelemente 4, die an dafür vorgesehenen Plätzen im Gehäuse 3 einbaubar sind, sowie zumindest eine Steuerungs-/Regelungseinrichtung 5 zum individuellen Ansteuern bzw. Regeln der zumindest zwei Heizelemente 4 auf. Mit dem erfindungsgemäßen Baukastensystem 1, in welchem selbstverständlich auch unterschiedlich ausgebildete Gehäuse 3 vorgesehen werden können, ist es vergleichsweise einfach möglich, Kraftstoffheizer 2 mit unterschiedlichsten Leistungsmerkmalen flexibel und individuell zu konfigurieren, wodurch nicht nur die Teilevielfalt deutlich reduziert werden kann, sondern auch der damit verbundene Lager- und Logistikaufwand. Insbesondere kann beispielsweise durch den Einbau von beispielsweise vier Heizelementen 4 in das Gehäuse 3 eine doppelt so hohe Leistung des Kraftstoffheizers 2 erreicht werden, als bei einem Einbau von lediglich zwei Heizelementen 4. Der aus dem erfindungsgemäßen Baukastensystem 1 zusammenbaubare Kraftstoffheizer 2 ist somit besonders einfach an individuelle Kundenwünsche anpassbar. Sowohl das Gehäuse 3 als auch die Heizelemente 4 bzw. die Steuerungs-/Regelungseinrichtung 5 sind dabei standardisierte, vorerprobte und bewährte Komponenten, wodurch ein Kraftstoffheizer 2 höchster Qualität vergleichsweise einfach herstellbar ist. Durch das Vorsehen zumindest zweier Heizelemente 4 und der zugehörigen Steuerungs-/Regelungseinrichtung 5 kann der Kraftstoffheizer 2 den Kraftstoff auch energiebewusst und besonders individuell beheizen.

Die Heizelemente 4 sind dabei vorzugsweise als sogenannte PTC-Heizelemente ausgebildet und ermöglichen dadurch eine Selbstregulierung der Heizleistung, dass sich bei derartigen PTC-Heizelementen der elektrische Widerstand mit der Temperatur ändert. Bei geringen Temperaturen ist der elektrische Widerstand geringer, so dass ein größerer Strom durch das jeweilige Heizelement 4 fließen und dieses erwärmen kann. Steigt die Temperatur des PTC-Heizelementes an, so vergrößert sich dessen Widerstand, wodurch der Stromfluss reduziert wird.

Die zumindest zwei in dem Baukastensystem 1 vorgesehenen Heizelemente 4 können dabei identisch, das heißt als Gleichteile, ausgebildet sein oder aber auch eine unterschiedliche Heizleistung aufweisen. Bei der Ausbildung als Gleichteile können diese in das Gehäuse eingesetzt werden, wobei bei einer individuellen Heizleistung von beispielsweise 200 Watt beim Einschalten eines Heizelements 4, 200 Watt Heizleistung erzeugt werden, wogegen beim Einschalten von beiden Heizelementen 4, 400 Watt Heizleistung vorliegen. Selbstverständlich kann eines der Heizelemente 4 auch eine zu einem anderen Heizelement 4 unterschiedliche Heizleistung, beispielsweise die Hälfte oder das Doppelte, besitzen.

Zweckmäßig weist zumindest ein Heizelement 4 ein eigenes Relais 6 auf, über welches es ferngesteuert von der Steuerungs-/Regelungseinrichtung 5 ein- und ausgeschaltet werden kann.

Generell kann der erfindungsgemäße und aus dem Baukastensystem 1 zusammengebaute Kraftstoffheizer 2 als Stabheizer 7 (vergleiche Figur 3a) als Aufsteckheizer 8 (vergleiche Figur 3b) oder als Deckelheizer (vergleiche Figur 3c) ausgebildet sein. Mit einem derartigen erfindungsgemäßen Kraftstoffheizer 2, beispielsweise in der Art eines Deckelheizers 9, kann insbesondere auch ein Kraftstofffilter 10 (vergleiche Figur 3c) ausgestattet werden.

Mit dem erfindungsgemäßen Baukastensystem 1 lassen sich somit Kraftstoffheizer 2 besonders individuell, einfach und mit einer geringen Teileanzahl herstellen. Mit diesen aus dem Baukastensystem 1 hergestellten Kraftstoffheizern 2 kann darüber hinaus auf unterschiedliche Umgebungsbedingungen mit minimalem Energieverbrauch reagiert werden. Selbstverständlich ist auch eine stufenweise bzw. gestaffelte Ansteuerung der einzelnen Relais 6 und damit der zugehörigen Heizelemente 4 denkbar, um insbesondere Spannungsspitzen beim Einschalten zu minimieren (Schwerpunkt des Einschaltstroms). Vorzugsweise ist dabei jedes der sich im Gehäuse befindenden Heizelemente 4 individuell mittels der Steuerungs-/Regelungseinrichtung 5 ansteuerbar.

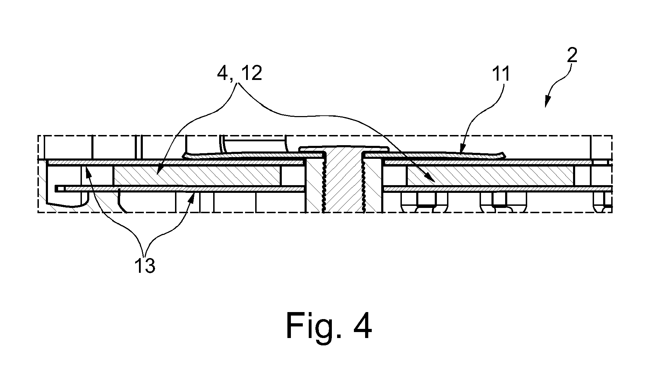

Generell können die Heizelemente 4 mit unterschiedlichsten Eigenschaften, z.B. Heizleistung, Oberflächentemperatur, Widerstand vorgehalten werden. Für leistungsschwächere Ausführungen des Kraftstoffheizers 2 hat man die Möglichkeit PTC-Heizelemente 4 mit höheren Widerstand einzubauen. In Fig. 4 ist eine Ausführungsform des Kraftstoffheizers 2 beschrieben, bei welcher zwei Heizelemente 4 mittels einer Feder 11 gehalten sind. Soll der Kraftstoffheizer 2 mit geringerer Leistung ausgeführt werden, so ist auch denkbar, dass anstatt eines Heizelements 4 ein sogenannter Dummy 12 in der Art eines Plastikteils eingesetzt wird. Dies ermöglicht es, die bisherige Feder 11 auch zur Fixierung lediglich eines Heizelements 4 zu verwenden, sofern das andere durch den Dummy 12 ersetzt wird. Selbstverständlich ist auch der Ersatz beider Heizelemente 4 durch entsprechende Dummys 12 denkbar, insbesondere sofern beispielsweise der Kraftstoffheizer 2 insgesamt vier Heizelemente 4 aufweist und zwei davon aufgrund einer schwächeren gewünschten Leistung durch entsprechende Dummys 12 ersetzt werden sollen. Die Heizelemente 4 bzw. die Dummys 12 sind dabei üblicherweise zwischen zwei Heizblechen 13 eingeklemmt, die aber in gleicher Weise auch bei einem Dummy 12 verwendet werden können. Durch die Dummys 12 (Kunststoffscheiben), die üblicherweise dieselbe Größe haben wie die Heizelemente 4, erspart man sich die Neuauslegung von Federn 11 und Heizblechen 12, da geometrisch derselbe Raum beansprucht wird und auch die Strömung des Kraftstoffs durch den Kraftstoffheizer 2 nicht beeinflusst wird.

## Patentansprüche

1. Baukastensystem (1) für einen Kraftstoffheizer (2) zum Beheizen von Kraftstoff, umfassend zumindest
- ein Gehäuse (3),
- zwei Heizelemente (4), die an dafür vorgesehenen Plätzen im Gehäuse (3) einbaubar sind,
- eine Steuerungs-/Regelungseinrichtung (5) zum individuellen Ansteuern der zumindest zwei Heizelemente (4).

2. Baukastensystem nach Anspruch 1,
**dadurch gekennzeichnet,**
**dass** die Heizelemente (4) als PTC-Heizelemente ausgebildet sind.

3. Baukastensystem nach Anspruch 1 oder 2,
**dadurch gekennzeichnet,**
**dass** zumindest zwei Heizelemente (4) eine unterschiedliche Heizleistung aufweisen, oder dass zumindest zwei Heizelemente (4) als Gleichteile ausgebildet sind.

4. Baukastensystem nach einem der vorhergehenden Ansprüche,
**dadurch gekennzeichnet,**
**dass** zumindest ein Heizelement (4) ein eigenes Relais (6) aufweist.

5. Baukastensystem nach einem der vorhergehenden Ansprüche,
**dadurch gekennzeichnet,**
**dass** der Kraftstoffheizer (2) als Stabheizer (7), als Aufsteckheizer (8) oder als Deckelheizer (9) ausgebildet ist.

6. Baukastensystem nach einem der vorhergehenden Ansprüche,
**dadurch gekennzeichnet,**
**dass** das Baukastensystem (1) einen Dummy (12) als Ersatz/Platzhalter für ein Heizelement (4) aufweist ist.

7. Kraftstoffheizer (2), hergestellt aus einem Baukastensystem (1) nach einem der vorhergehenden Ansprüche, mit einem Gehäuse (3), zumindest zwei Heizelementen (4), die an dafür vorgesehenen Plätzen im Gehäuse (3) einbaubar sind und einer Steuerungs-/Regelungseinrichtung (5) zum individuellen Ansteuern der zumindest zwei Heizelemente (4).

8. Kraftstoffheizer nach Anspruch 7,
**dadurch gekennzeichnet,**
**dass** zumindest zwei Heizelemente (4) eine unterschiedliche Heizleistung aufweisen, oder dass zumindest zwei Heizelemente (4) als Gleichteile ausgebildet sind.

9. Kraftstoffheizer nach Anspruch 7 oder 8,
**dadurch gekennzeichnet,**
**dass** zumindest ein Heizelement (4) ein eigenes Relais (6) aufweist.

10. Kraftstoffheizer nach einem der Ansprüche 7 bis 9,
**dadurch gekennzeichnet,**
**dass** der Kraftstoffheizer (2) als Stabheizer (7), als Aufsteckheizer (8) oder als Deckelheizer (9) ausgebildet ist.

11. Kraftstofffilter (10) mit einem Kraftstoffheizer (2) nach einem der Ansprüche 7 bis 10.
